# EUROPÄISCHE PATENTSCHRIFT

(11) **EP 0 662 279 B1**
(45) Veröffentlichungstag und Bekanntmachung des Hinweises auf die Patenterteilung: **01.10.1997**
(21) Anmeldenummer: 95810001.8
(22) Anmeldetag: 03.01.1995
(51) Int. Cl.: A01G 9/24

(54) **Blumenbinde- und Pflanzentränkewagen**
Flower fastening and plant watering carriage
Chariot pour lier des fleurs et pour imbiber des plantes

(30) Priorität: 07.01.1994 CH 50/94
(43) Veröffentlichungstag der Anmeldung: 12.07.1995
(73) Patentinhaber: Mettauer-Hosmann, Hans, CH-5264 Gipf-Oberfrick (CH); Mettauer-Hosmann, Heidi, CH-5264 Oberfrick (CH)
(72) Erfinder: Mettauer-Hossmann, Hans, CH-5264 Gipf-Oberfrick (CH)
(74) Vertreter: Luchs, Willi

(56) Entgegenhaltungen:
- EP-A- 0 066 547
- EP-A- 0 578 000

## Beschreibung

Die Erfindung bezieht sich auf einen Blumenbinde- und Pflanzentränkewagen.

Topfpflanzen benötigen zu ihrem Gedeihen Wasser. Das am meisten angewandte Vorgehen besteht darin, dass die Pflanzen mit Giesskanne oder Schlauch mit Wasser versorgt werden. Dabei ist es oft dem Zufall überlassen, ob eine Pflanze zuviel oder zuwenig Feuchtigkeit erhält. Pflanzenwurzeln, die zusammen mit Erde in stehendem Wasser verbleiben, faulen. Anderseits verwelken Pflanzen, die nur oberflächlich getränkt sind. Bei einer neueren Methode werden die sich in mit Erde gefüllten Gefässen befindlichen Pflanzen im Wasser so lange getaucht, bis keine Luftblasen mehr aufsteigen. Hernach lässt man das überschüssige Wasser abtropfen. Es zeigt sich, dass derart getauchte Pflanzen relativ lange ohne neue Wasserzufuhr auskommen, sodass die Giessperioden verlängert werden können.

Unbefriedigend ist dabei, dass die üblicherweise auf dem Boden stehenden Pflanzengefässe in gebückter Haltung mit Wasser versorgt werden müssen, was mit der Zeit zu Wirbelsäulenschäden führen kann. Ausserdem ist nicht jeder Standort für Tränkearbeiten geeignet, da für den Wasserabfluss zum Beispiel beim Abtropfen gesorgt werden muss.

Mit der Erfindung soll die Aufgabe gelöst werden, eine Vorrrichtung zu schaffen, mit welcher Pflanzen-Tränkearbeiten in weitgehend aufrechter Haltung und durch Vermeidung von Transportwegen in kürzerer Zeit durchgeführt werden können und Abtropfwasser aufgefangen werden kann.

Diese Aufgabe wird durch die im Kennzeichen des Anspruches 1 enthaltenen Merkmale gelöst.

Da dieser Tränkewagen fahrbar ausgeführt ist, kann er den zu wässernden Pflanzen nachgefahren werden, statt dass die Pflanzen mühsam über lange Transportwege zur Tränkestelle getragen werden. Weil sich der Tauchbeckenboden in einem Abstand über dem Boden befindet, lässt sich die Wassermenge und damit das Gewicht in den dem Zweck entsprechenden Grenzen halten, sodass der Tränkewagen durch eine Person verfahrbar ist. Der gelochte Abtropftisch befindet sich auf bequemer Arbeitshöhe und das Abtropfwasser wird aufgefangen und gelangt in das Tauchbecken zurück. Das ausziehbare Tablar ermöglicht eine Vergrösserung der Arbeitsfläche, ohne dass dadurch der Platzbedarf des Tränkewagens z.B. im Nichtgebrauchszustand vergrössert wird.

Mit dem Wasser-Ablauf und/oder -Zufuhrorgan wird die Entleerung des Tauchbeckens und das Einfüllen ab öffentlichem Wassernetz erleichtert.

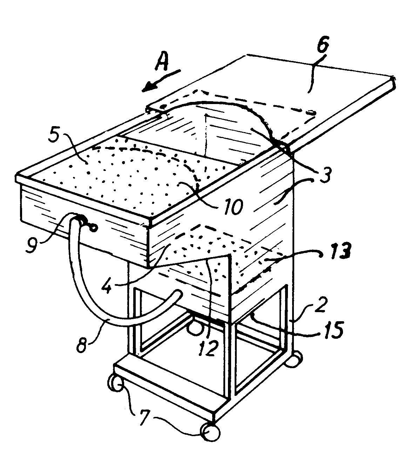

In der Zeichnung ist ein Ausführungsbeispiel des Erfindungsgegenstandes dargestellt.

Der Blumenbinde- und Pflanzentränkewagen enthält ein auf einem Gestell 2 abgestütztes Tauchbecken 3 von vorzugsweise quaderförmiger Gestalt. Der Boden des Tauchbeckens befindet sich in einem Abstand vom Fussboden der mindestens 1/4 der Wagengesamthöhe beträgt. Am unteren Ende des Gestelles 2 sind Rollen 7 oder Räder befestigt, sodass der mit Wasser gefüllte Blumen- und Pflanzentränkewagen leicht den Pflanzenstandorten nachgeführt werden kann. In einem Abstand von vorzugsweise etwa 18 cm über dem Beckenboden 15 befindet sich ein lose eingesetztes gelochtes Blech 13 als Abstellfläche für zu tauchende kleine und mittelgrosse Pflanzengefässe. Für grosse Pflanzen und zum Reinigen kann dieses einen Zwischenboden 13 bildende gelochte Blech 13 herausgenommen werden. Ausserdem dient es zum Auffangen von Schwemmerde und Blätter.

An das Tauchbecken 3 schliesst sich seitlich ein Beckenfortsatz 4 an, der eine keilförmige Form mit einer gegen das Tauchbecken hin geneigten Ablaufwand 12 hat.

Oberhalb des Beckenfortsatzes 4 befindet sich ein auf bequemer Arbeitshöhe angeordneter horizontaler Abtropftisch 5. Dieser Abtropftisch 5 ist für den Wasserabfluss mit Löchern 10 versehen. Das abgetropfte Wasser gelangt über die schräge Ablaufwand 12 in das Tauchbecken zurück. Auf der gegenüberliegenden Seite ist etwa auf gleicher Höhe ein ausziehbares, horizontales Tablar 6 angeordnet, das im Bereich des Tauchbeckens 3 mit einer konkaven Ausnehmung versehen ist. Dieses Tablar 6 ist in Richtung des Pfeiles A horizontal verschiebbar. Im ausgezogenen Zustand des Tablares 6 dient es als Abstellplatz für Pflanzen vor dem Tauchen.

Zur Entleerung und zum Einfüllen des Tauchbeckens 3 ist ein flexibler Schlauch 8 vorhanden, der an einem am Tauchbeckenboden vorhandenen Nippel angeschlossen ist. Dieser Schlauch 8 ist so lang gewählt, dass er zum Einfüllen mit einem benachbarten Wasseranschluss gekuppelt werden kann. Das freie Schlauchende wird oberhalb des Flüssigkeitsspiegels in einer Einhängeeinrichtung 9 festgehalten und vorzugsweise mit einem Verschlusszapfen versehen. Zur Entleerung des Tauchbeckens 3 wird der Schlauch 8 in einen Ablaufschacht od.dgl. geführt. Auf diese Weise kann ein verstopfungsgefährdetes Abstellventil vermieden werden.

Das Tablar 6 kann entlang von Gleitführungen in Richtung des Pfeiles A über das Tauchbecken 3 geschoben werden. Dadurch wird das Tauchbecken 3 voll überdeckt und es entsteht eine durchgehende Arbeitsfläche, die ringsherum zugänglich ist, beispielsweise für grosse Blumenbindearbeiten.

Durch die Kombination der im Patentanspruch 1 genannten Merkmale gelingt es, einen die spezifischen Bedürfnisse voll befriedigenden Wagen zu schaffen.

## Patentansprüche

1. Blumenbinde- und Pflanzentränkewagen, gekennzeichnet durch die Kombination folgender Merkmale:
ein von einem fahrbaren Gestell (2) abgestütztes Tauchbecken (3),
der Tauchbeckenboden (15) vom Boden einen Abstand von mindestens 1/4 der Wagengesamthöhe hat,
mit dem Tauchbecken (3) ein seitlicher Beckenfortsatz (10) mit einer gegen das Tauchbecken (3) hin geneigten Ablaufwand (12) angeordnet ist,
oberhalb des Tauchbeckens sich ein gelochter Abtropftisch (5) befindet,
ein horizontales, ausziehbares Tablar (6) vorhanden ist, das im ausgezogenen Zustand seitlich über das Tauchbecken (3) hinausragt und im eingeschobenen Zustand das Tauchbecken als Arbeitstisch überdeckt,
und vom Tauchbeckenbodenbereich ein Wasser-Ablauf (8) und/oder - Zufuhrorgan abragt.

2. Blumenbinde- und Pflanzentränkewagen nach Anspruch 1, dadurch gekennzeichnet, dass das Ablauforgan ein ventilloser Schlauch (8) ist, der mit einer oberhalb des Flüssigkeitsspiegels befindlichen Einhängeeinrichtung (9) für das freie Schlauchende zusammenwirkt.

3. Blumenbinde- und Pflanzentränkewagen nach Anspruch 2, dadurch gekennzeichnet, dass das freie Schlauchende mit einem Anschlussorgan zur Verbindung mit einer Wasserzuflussleitung versehen ist.

4. Blumenbinde- und Pflanzentränkewagen nach einem der Ansprüche 1 bis 3, dadurch gekennzeichnet, dass das Tablar (6) auf der dem Tauchbecken (3) zugewandten Seite einen konkaven Ausschnitt (12) besitzt.

5. Blumenbinde- und Pflanzentränkewagen nach Anspruch 1, dadurch gekennzeichnet, dass sich in einem Abstand oberhalb des Tauchbeckenbodens (15) ein heraushebbarer gelochter Zwischenboden (13) befindet.

## Claims

1. Flower-tying and plant-watering trolley, characterised by the combination of the following features:
an immersion basin (3) supported by a movable frame (2), the base (15) of the immersion basin is at a distance of at least one quarter of the total height of the trolley from the floor,
a lateral basin extension (10) with a drainage wall (12) inclined towards the immersion basin (3) is provided with the immersion basin (3),
a perforated drip table (5) is located above the immersion basin,
a horizontal, extendable leaf (6) is provided, which in the extended state projects laterally beyond the immersion basin (3) and in the pushed-in state covers the immersion basin as a working table,
and a water drain (8) and/or supply member projects from the bottom region of the immersion basin.

2. Flower-tying and plant-watering trolley according to Claim 1, characterised in that the drain member is a hose (8) without a valve, which cooperates with a suspension device (9) for the free end of the hose, located above the liquid level.

3. Flower-tying and plant-watering trolley according to Claim 2, characterised in that the free end of the hose is provided with a connection member for connection to a water supply pipe.

4. Flower-tying and plant-watering trolley according to one of Claims 1 to 3, characterised in that on the side facing the immersion basin (3), the leaf (6) has a concave cut-out (12).

5. Flower-tying and plant-watering trolley according to Claim 1, characterised in that located at a distance above the base (15) of the immersion basin is a perforated intermediate base (13) which can be lifted out.

## Revendications

1. Chariot pour lier les fleurs et irriguer des plantes, caractérisé par la combinaison des éléments suivants :
un bassin de trempe (3), soutenu par un bâti mobile (2),
le fond (15) du bassin de trempe fait avec le sol une distance au moins égale au quart de la hauteur hors tout du chariot,
avec le bassin de trempe (3), un prolongement latéral (10) du bassin est pourvu d'une paroi d'écoulement (12), inclinée vers le bassin de trempe (3),
au-dessus du bassin de trempe se trouve une table d'égouttage perforée (5),
on a une tablette horizontale extensible (6), qui en extension dépasse latéralement du bassin de trempe (3), et en position rétractée recouvre le bassin de trempe sous forme d'une table de travail, et
un organe d'évacuation (8) et/ou d'amenée d'eau dépasse de la zone du fond du bassin de trempe.

2. Chariot pour lier des fleurs et irriguer des plantes selon la revendication 1, caractérisé en ce que l'organe d'évacuation est un tuyau (8) ne comportant pas de vanne, qui coopère avec un dispositif d'accrochage (9), se trouvant au-dessus du niveau du liquide, et correspon-dant à l'extrémité libre du tuyau.

3. Chariot pour lier des fleurs et irriguer des plantes selon la revendication 2, caractérisé en ce que l'extrémité libre du tuyau est pourvu d'un organe de raccordement, pour permettre une liaison avec une conduite d'amenée d'eau.

4. Chariot pour lier des fleurs et irriguer des plantes selon l'une des revendications 1 à 3, caractérisé en ce que la tablette (6) possède, sur son côté dirigé vers le bassin de trempe (3), une échancrure concave (12).

5. Chariot pour lier des fleurs et irriguer des plantes selon la revendication 1, caractérisé en ce qu'un fond intermédiaire perforé (13), pouvant être extrait par levage, se trouve à une certaine distance au-dessus du fond (15) du bassin de trempe.
